Europäisches Patentamt

European Patent Office

Office européen des brevets

(11) Numéro de publication: **0 122 857**
**A1**

(12) ## DEMANDE DE BREVET EUROPEEN

(21) Numéro de dépôt: **84400726.0**

(22) Date de dépôt: **11.04.84**

(51) Int. Cl.³: **F 41 H 5/04**
**B 32 B 7/00, B 32 B 5/22**

(30) Priorité: **13.04.83 FR 8306026**

(43) Date de publication de la demande:
**24.10.84 Bulletin 84/43**

(84) Etats contractants désignés:
**AT BE CH DE GB IT LI LU NL SE**

(71) Demandeur: **Moriceau, Daniel**
**26, rue Cuvier**
**F-44600 Saint Nazaire(FR)**

(71) Demandeur: **Moriceau, Yves**
**24, rue Marcel Sembat**
**F-44600 Saint Nazaire(FR)**

(72) Inventeur: **Moriceau, Daniel**
**26, rue Cuvier**
**F-44600 Saint Nazaire(FR)**

(72) Inventeur: **Moriceau, Yves**
**24, rue Marcel Sembat**
**F-44600 Saint Nazaire(FR)**

(74) Mandataire: **Mongrédien, André et al,**
**c/o SOCIETE DE PROTECTION DES INVENTIONS 25, rue**
**de Ponthieu**
**F-75008 Paris(FR)**

(54) **Structure multicouches de protection contre les projectiles.**

(57) L'invention concerne une structure multicouches de protection contre les projectiles.

Cette structure comprend successivement, dans le sens de déplacement du projectile, un premier ensemble (1) de couches dites d'ensevelissement du projectile, chaque couche (2) de ce premier ensemble étant constituée par un tissu de fibres d'aramide, un deuxième ensemble (3) de couches (5, 6) dites de diffusion d'énergie cinétique, constituées d'autres tissus, et au moins une couche supplémentaire dite d'amortissement (4). Cette structure est caractérisée en ce que le deuxième ensemble (3) de couches comprend des couches successives (5, 6) alternées constituées de tissu (5) de fibres de carbone et de tissu (6) de fibres de verre, rendues solidaires par un agent de liaison (7), la couche supplémentaire (4) étant une couche de matériau élastique.

Application aux gilets pare-balles.

Croydon Printing Company Ltd.

EP 0 122 857 A1

# Structure multicouches de protection contre les projectiles.

La présente invention concerne une structure multicouches de protection contre les projectiles. Elle s'applique notamment à la confection de gilets pare-balles servant à la protection contre les balles ou autres projectiles, à vitesse relativement grande.

On connaît des structures multi-couches de protection contre les projectiles, telles que celle qui est décrite, notamment dans le brevet français n° 2292946. Cette structure comprend un empilage de couches ou panneaux qui comprend successivement, dans le sens de déplacement du projectile plusieurs groupes de panneaux : tout d'abord un premier groupe de panneaux qui peut être qualifié de groupe d'ensevelissement du projectile. Ce premier groupe comprend plusieurs panneaux d'une matière fibreuse, de grande résistance à la traction ; cette matière peut être par exemple un polymère d'aramide ou polyamide aromatique, plus connu sous la dénomination commerciale de "KEVLAR" produit par la Société Dupont de Nemours. Les panneaux de ce premier groupe ne sont pas solidaires les uns des autres. Cette structure comprend aussi un deuxième groupe de panneaux, rendus solidaires par un agent de liaison ; les panneaux de ce deuxième groupe sont aussi destinés à ensevelir ou retenir le projectile, par élasticité. Ils sont constitués de fibres tissées qui sont de préférence les mêmes que celles des panneaux du premier groupe, c'est-à-dire des fibres d'un polymère d'aramide. A la différence des panneaux du premier groupe, les panneaux de ce deuxième groupe sont rendus solidaires par un agent de liaison qui peut être par exemple une matière thermoplastique flexible, telle qu'une résine époxy par exemple.

La structure comprend aussi un troisième groupe de panneaux ; ces panneaux sont eux aussi destinés à ensevelir le projectile et ils sont constitués de fibres de verre par exemple constituant une matière flexible. Ces fibres sont tissées et peuvent éventuellement être remplacées par des fibres de graphite. Certains de ces panneaux peuvent être rendus solidaires par un agent de liaison qui peut être le même que celui qui est utilisé pour rendre solidaires les panneaux du deuxième groupe.

Enfin, la structure de protection décrite dans le brevet précité comprend un quatrième groupe de panneaux qui sont destinés à absorber l'énergie cinétique résiduelle du projectile. Les panneaux de ce quatrième groupe sont constitués par des fibres tissées de grande résistance à la traction, imprégnées d'un revêtement de matière vinylique. Ces fibres peuvent être par exemple des fibres d'un polymère d'aramide (polyamide aromatique), telles que mentionnées plus haut et connues sous la dénomination commerciale de "KEVLAR".

La structure décrite dans le brevet précité peut résister à la pénétration d'une balle d'un pistolet magnum d'un calibre de 11,2 mm. Il est cependant indiqué dans ce brevet, qu'une balle de ce calibre provoque dans une argile molle, placée derrière la structure, un enfoncement voisin de 2,5 cm dans cette argile. Il est évident qu'une personne portant un gilet pare-balles dont la structure est celle qui vient d'être décrite, peut facilement survivre à l'impact d'une balle, mais au prix d'un traumatisme assez important. De plus, si cette structure offre une protection assez efficace malgré les possibilités de traumatismes qu'elle laisse subsister, elle a aussi pour inconvénient d'être épaisse, difficile à fabriquer et qu'elle est par conséquent coûteuse.

D'autres structures de protection compor-

SP 2102 DC

tent en plus des panneaux métalliques, généralement en tungstène, ce qui accroît leur poids et leur coût.

L'invention a pour but de remédier à ces inconvénients et notamment de réaliser une structure multi-couches de protection contre les projectiles, simple à élaborer, peu coûteuse, ne laissant subsister aucun traumatisme à la suite de l'impact d'une balle ou d'un projectile. Cette structure est de plus peu épaisse, souple (ce qui en facilite l'utilisation) et elle ne comporte pas de plaque métallique.

L'invention a pour objet une structure multicouches de protection contre les projectiles, comprenant successivement, dans le sens de déplacement du projectile, un premier ensemble de couches dites d'ensevelissement du projectile, chaque couche de ce premier ensemble étant constituée par un tissu de fibres d'aramide, un deuxième ensemble de couches dites de diffusion d'énergie cinétique, constituées d'autres tissus, et au moins une couche supplémentaire dite d'amortissement, caractérisée en ce que le deuxième ensemble de couches comprend des couches successives alternées constituées de tissu de fibres de carbone et de tissu de fibres de verre, rendues solidaires par un agent de liaison, la couche supplémentaire étant une couche de matériau élastique.

Selon une autre caractéristique, le tissu de fibres de carbone du deuxième ensemble est un satin de fibres de carbone.

Selon une autre caractéristique, le tissu de fibres de carbone du deuxième ensemble est une toile de fibres de carbone.

Selon une autre caractéristique, le satin de fibres de carbone est un satin à un fil de trame et un fil de chaîne.

Selon une autre caractéristique, le tissu de fibres de verre est un satin de fibres de verre.

SP 2102 DC

Selon une autre caractéristique, le satin de fibres de verre est un satin à un fil de trame et un fil de chaîne.

Selon une autre caractéristique, les fils de trame de deux couches du tissu satin de fibres de carbone situées de part et d'autre d'une couche de tissu de fibres de verre, dans le deuxième ensemble, ont des directions perpendiculaires, pour ledit satin.

Selon une autre caractéristique, l'agent de liaison des couches de tissu de fibres de carbone et de tissu de fibres de verre, est une matière thermo - plastique flexible.

Selon une autre caractéristique, la matière thermoplastique est une résine époxy.

Selon une autre caractéristique, les couches du premier ensemble sont contenues dans une enveloppe plastique de maintien étanche aux rayons ultraviolets et à l'air.

Selon une autre caractéristique, la couche supplémentaire d'amortissement est une couche d'un caoutchouc de densité supérieure à 150 kg par $m^3$.

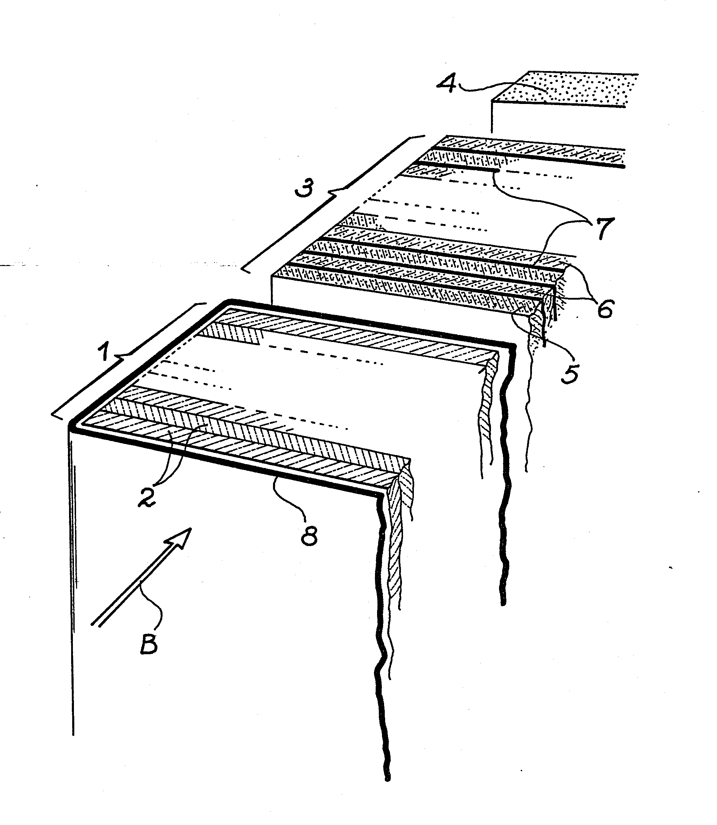

Les caractéristiques et avantages de l'invention ressortiront mieux de la description qui va suivre, donnée en référence au dessin annexé qui représente schématiquement et en coupe, une structure multicouches de protection contre les projectiles, conforme à l'invention.

Cette structure comprend, dans le sens de déplacement d'un projectile indiqué par la flèche B, un premier ensemble 1 de couches dites d'"ensevelissement" du projectile. Chaque couche 2 de ce premier ensemble est constituée par un tissu de fibres d'un polymère d'aramide (plus connu sous la dénomination commerciale de KEVLAR); Les couches de ce premier ensemble ne sont pas solidaires les unes des autres et elles sont contenues, par exemple dans un sac 8 de matière plastique telle que du polyéthylène. Ce sac imperméable à l'air et aux rayons ultraviolets est aussi destiné à protéger les couches de polymère d'aramide. Les couches de ce premier ensemble peuvent être qualifées de couches d'ensevelissement du projectile ou de résistance à la perforation. Chaque couche est un tissu de fils d'aramide ; ce tissu est de type taffetas et les fils utilisés pour le tissage de ce taffetas ont une résistance à la traction de 270 kg/mm$^2$, un module de traction de 6000 kg/mm$^2$. L'allongement caractéristique du fil est de 4% et le diamètre de chaque fil est de 12,1 μ environ. Le taffetas réalisé à l'aide de ces fils a un compte de fils de 12x12±0,5/cm, tandis que la masse de ce taffetas est de 275±10 g/m$^2$. L'épaisseur du tissu de chaque couche est de 36/100 mm. De manière préférentielle, quinze couches de ce tissu sont superposées dans le premier ensemble 1. Des essais effectués avec une balle de calibre 11,2 mm par un pistolet magnum à moins de 7 mètres de distance, montrent que la balle ne traverse pas plus de six couches de ce premier ensemble 1.

La structure multicouches de l'invention comprend aussi un deuxième ensemble 3 de couches dites de "diffusion de l'énergie cinétique" du projectile. Ces couches sont constituées d'autres tissus qui seront décrits plus loin en détail. Enfin, la structure comprend une couche supplémentaire 4, d'amortissement qui sera, elle aussi, décrite plus loin en détail.

Le deuxième ensemble 3 de couches comprend des couches successives alternées, constituées de tissu de carbone 5 et de tissu de fibres de verre 6, rendues solidaires par un agent de liaison 7. La couche supplémentaire 4 est une couche de matériau élastique. Dans un mode de réalisation de l'invention, le tissu de fibres de carbone constituant chaque couche 5 du deuxième ensemble 3, est un satin. Ce satin présente un rapport d'armure voisin de 8,5x8,5, à effet de trame (les fils de trame sont groupés par deux). 3000 fibres constituent chaque fil de chaîne et 3000 fibres constituent chaque fil de trame. La masse de ce satin est de 364 g/m$^2$. Dans ce mode de réalisation pour lequel les fils de trame sont groupés par deux, les fils de trame de deux couches 5, 8, de satin de fibres de carbone qui sont situées de part et d'autre d'une couche 6 de tissu de fibres de verre ont des directions perpendiculaires.

Le tissu de fibres de carbone de chaque couche 5 peut également être constitué par un taffetas de 3000 fibres présentant 4,9 fils par centimètre en chaîne et en trame et d'une densité de 193 g ± 8 g par m$^2$, pour une épaisseur de 0,18 mm. Ce tissu a l'avantage d'être léger et moins coûteux que le précédent.

Dans un autre mode de réalisation de la structure conforme à l'invention, chaque couche de tissu de fibres de carbone, peut être constituée par un tissu de fibres de carbone, de type satin, dans lequel les fils de trame ne sont pas groupés par deux.

Dans ce cas, le satin est régulier et il n'est pas nécessaire de positionner perpendiculairement les fils de trame de deux couches 5, 8, de fibres de carbone, situées de part et d'autre d'une couche 6 de fibres de verre. Dans un autre mode de réalisation, les couches de fibres de carbone peuvent être constituées d'un tissu de type "toile".

Les couches 6 de tissu de fibres de verre qui sont alternées avec les couches 5 de tissu de fibres de carbone, dans le deuxième ensemble 3 peuvent être constituées par un tissu de type satin présentant un rapport d'armature voisin de 8x8. Dans ce tissu, la fibre de verre a une dimension de 9μ et elle a subi un traitement de désensimage, bien connu dans l'état de la technique. Chaque fil du satin est constitué par 68 fibres de verre et ce satin comprend 22,2 fils de chaîne pour 20,7 fils de trame. La résistance de ce tissu est de 360 kg pour 5 cm en chaîne et 340 kg pour 5 cm en trame. Sa masse est de 310 g/m$^2$ et son épaisseur est 21/100 de mm. Cette fibre de verre est commercialisée sous la dénomination de fibres de verre de type E ou de type S, par la Société Dupont de Nemours. Ce satin comporte un fil de trame pour un fil de chaîne.

Dans ce deuxième ensemble 3 et quel que soit le mode de réalisation des couches de tissu de fibres de carbone, les couches de tissu de fibres de carbone et de tissu de fibres de verre alternées sont rendues solidaires par un agent de liaison qui est une matière thermoplastique flexible. Dans un mode préféré de réalisation, cette matière thermoplastique flexible est une résine époxy.

Enfin, la couche supplémentaire 4 dite d'amortissement, est constituée par un matériau élastique. Dans l'invention, cette couche supplémentaire 4 est de préférence constituée par une mousse de caoutchouc de forte densité (160 kg/m$^3$) et elle est d'épaisseur assez faible (3 à 5 mm).

Le deuxième ensemble de couches alternées de tissus de fibres et de fibres de verre, comporte de préférence cinq couches de fibres de carbone et six couches de fibres de verre alternées.

Dans la structure multicouches qui vient d'être décrite, le premier ensemble de couches 1 est un ensemble qui empêche toute pénétration du projectile en l'ensevelissant, grâce à l'élasticité des tissus qui constituent ces couches. Le second ensemble de couches 3 alternées est un ensemble qui favorise la dispersion de l'énergie cinétique du projectile qui a été retenu par les couches du premier ensemble. Ce second ensemble se déforme par suite de la pénétration du projectile dans les premières couches du premier ensemble, cette déformation permet la dispersion de l'énergie du projectile et elle est absorbée par la couche supplémentaire 4. Cette couche supplémentaire de caoutchouc de haute densité évite le traumatisme qui pourrait résulter de la déformation des couches du deuxième ensemble 3.

La structure multicouches qui vient d'être décrite est très légère, peu épaisse, facile à fabriquer et peu coûteuse. Elle permet d'éviter tout traumatisme, même en présence d'une balle de calibre de 11,2 mm, tirée à une distance inférieure à 7 m, par un pistolet de type magnum. Les essais ont montré qu'en présence d'une balle de ce calibre tirée par ce pistolet, il n'y a pratiquement aucune déformation d'une argile molle, placée derrière la couche supplémentaire 4. Ceci indique qu'un sujet équipé d'un gilet pare-balles réalisé dans cette structure pourrait, non seulement survivre, mais également ne subir aucun traumatisme. Cette structure très légère peut être facilement découpée pour réaliser un gilet pare-balles. Elle ne comporte aucune plaque métallique.

REVENDICATIONS

1. Structure multicouches de protection contre les projectiles, comprenant successivement, dans le sens de déplacement du projectile, un premier ensemble (1) de couches dites d'ensevelissement du projectile, chaque couche (2) de ce premier ensemble étant constituée par un tissu de fibres d'aramide, un deuxième ensemble (3) de couches (5, 6) dites de diffusion d'énergie cinétique, constituées d'autres tissus, et au moins une couche supplémentaire dite d'amortissement (4), caractérisée en ce que le deuxième ensemble (3) de couches comprend des couches successives (5, 6) alternées constituées de tissu (5) de fibres de carbone et de tissu (6) de fibres de verre, rendues solidaires par un agent de liaison (7), la couche supplémentaire (4) étant une couche de matériau élastique.

2. Structure multicouches selon la revendication 1, caractérisée en ce que le tissu (5) de fibres de carbone du deuxième ensemble (3) est un satin de fibres de carbone.

3. Structure multicouches selon la revendication 1, caractérisée en ce que le tissu (5) de fibres de carbone du deuxième ensemble (3) est une toile de fibres de carbone.

4. Structure multicouches selon la revendication 2, caractérisée en ce que le tissu (5) de satin de fibres de carbone est un satin à un fil de trame et un fil de chaîne.

5. Structure multicouches selon la revendication 1, caractérisée en ce que le tissu de fibres (6) de verre est un satin de fibres de verre.

6. Structure multicouches selon la revendication 5, caractérisée en ce que le tissu satin (6) de fibres de verre est un satin à un fil de trame et un fil de chaîne.

7. Structure selon la revendication 6, caractérisée en ce que les fils de trame de deux couches du tissu satin (5) de fibres de carbone situées de part et d'autre d'une couche de tissu (6) de fibres de verre, dans le deuxième ensemble (3), ont des directions perpendiculaires, pour ledit satin.

8. Structure selon l'une quelconque des revendications 1 à 7, caractérisée en ce que l'agent de liaison (7) des couches (5) de tissu de fibres de carbone et de tissu (6) de fibres de verre, est une matière thermoplastique flexible.

9. Structure selon la revendication 8, caractérisée en ce que la matière thermoplastique est une résine époxy.

10. Structure selon la revendication 9, caractérisée en ce que les couches (2) du premier ensemble (1) sont contenues dans une enveloppe plastique (9) de maintien, imperméable aux rayons ultraviolets et à l'air.

11. Structure selon la revendication 10, caractérisée en ce que la couche supplémentaire (4) d'amortissement est une couche d'un caoutchouc de densité supérieure à 150 kg par $m^3$.

**0122857**

Numéro de la demande

**RAPPORT DE RECHERCHE EUROPEENNE**

Office européen
des brevets

EP   84 40 0726

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,Y | FR-A-2 292 946  (MORGAN)<br>* Page  3, lignes 23-37; page 4, en  entier;  page 5, lignes 1-21; figures 1-3 * | 1,8-10 | F 41 H    5/04<br>B 32 B    7/00<br>B 32 B    5/22 |
| | --- | | |
| Y | DE-A-2 931 110  (MEHLER)<br>* Page  4, paragraphe 1; page 5, dernier  paragraphe;  page  6, en entier;  page  7,  paragraphe  1; page 9,  paragraphe  2; page 11, paragraphes    2,3;    page   12, paragraphe 1 * | 1,8 | |
| | --- | | |
| Y | FR-A-2 096 434  (MONSANTO)<br>* Page  3, lignes 20-40; page 4, lignes 1-26; page 14, en entier * | 1,3 | |
| | --- | | DOMAINES TECHNIQUES RECHERCHES (Int. Cl. ³) |
| Y | FR-A-2 469 277  (SOC. NAT. DES POUDRES)<br>* Page  4, lignes 20-33; page 8, lignes 24-30 * | 3,8,9 | |
| | --- | | F 41 H<br>B 32 B |
| Y | CH-A-  587 467  (TIG BICORD)<br>* Colonne   1,   lignes   23-68; colonne  2,  lignes  1-20; colonne 3, lignes 49-64; figure 3 * | 10 | |
| | ---              -/- | | |

Le présent rapport de recherche a été établi pour toutes les revendications

| Lieu de la recherche<br>LA HAYE | Date d'achèvement de la recherche<br>18-06-1984 | Examinateur<br>VAN DER PLAS J.M. |
|---|---|---|

**Office européen
des brevets**

**RAPPORT DE RECHERCHE EUROPEENNE**

EP   84 40 0726

| | DOCUMENTS CONSIDERES COMME PERTINENTS | | Page   2 |

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-1 158 434   (BJORHOLM)  * Page 1, colonne de gauche, paragraphes 3,4; colonne de droite, paragraphe 3; page 2, colonne de gauche, paragraphes 2,9,10; colonne de droite, paragraphes 1,2 *  ----- | 2,4,5, 6,7 | |
| | | | DOMAINES TECHNIQUES RECHERCHES (Int. Cl. 3) |

Le présent rapport de recherche a été établi pour toutes les revendications

| Lieu de la recherche LA HAYE | Date d'achèvement de la recherche 18-06-1984 | Examinateur VAN DER PLAS J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

OEB Form 1503. 03.82